# EUROPEAN PATENT APPLICATION

(11) **EP 1 783 472 A1**
(43) Date of publication of application: **09.05.2007**
(21) Application number: 05775022.6
(22) Date of filing: 23.08.2005
(51) Int. Cl.: G01L 5/00, B60Q 1/115, G01V 7/00, H01H 13/712

(54) **SEAT CONDITION DETECTION DEVICE AND ILLUMINATION DIRECTION ADJUSTMENT DEVICE FOR VEHICLE HEAD LAMP**

(30) Priority: 27.08.2004 JP 2004248662
(71) Applicant: AISIN SEIKI KABUSHIKI KAISHA, Kariya-shi, Aichi-ken 448-8650 (JP)
(72) Inventor: OHTAKE, Wataru, , Kariya-shi, Aichi 4488605; (JP); KUWABARA, Takeshi, , Kariya-shi, Aichi 4488605; (JP)
(74) Representative: Leson, Thomas Johannes Alois
(86) International application number: PCT/JP2005/015275
(87) International publication number: WO 2006/022261

(57) **Abstract**

A seat state detecting apparatus is provided with a sensor unit including a plurality of pressure sensitive switch units connected in parallel to each other. Each of the pressure sensitive switch units is switched to an on state or an off state in correspondence to a pressure. A plurality of pressure sensitive switch units are arranged in the seat in a dispersed manner. The seat state detecting apparatus determines a load applied to the seat on the basis of the on/off state of a plurality of pressure sensitive switch units. The sensor unit is provided with a short-circuit detecting resistor which is connected in series to a plurality of pressure sensitive switch units. Accordingly, it is possible to reliably detect a short circuit of a power source line for feeding electricity to the sensor unit.

## Description

### TECHNICAL FIELD

The present invention relates to a seat state detecting apparatus and an aiming adjusting apparatus of a vehicular headlamp.

### BACKGROUND ART

Conventionally, as a seating detection apparatus determining whether or not an occupant sits on a seat of a vehicle such as a motor vehicle or the like, there is an apparatus which is provided with a sensor unit including a plurality of pressure sensitive portions arranged in the seat in a dispersed manner, and a determining section. A resistance value of the sensor unit is changed in correspondence to a pressure which each of the pressure sensitive portions bears. The determining section determines a load applied to the seat on the basis of the resistance value of the sensor unit, and determines whether or not the occupant sits on the seat. It is desirable to detect an abnormality in the apparatus mentioned above, for example, a short circuit of a power source line for feeding electricity to the sensor unit.

### DISCLOSURE OF THE INVENTION

### PROBLEM TO BE SOLVED BY THE INVENTION

An object of the present invention is to provide a seat state detecting apparatus which reliably detects a short circuit of a power source line for feeding electricity to a sensor unit, and an aiming adjusting apparatus of a vehicular headlamp.

### MEANS FOR SOLVING THE PROBLEM

In order to achieve the object mentioned above, in accordance with the present invention, there is provided a seat state detecting apparatus provided with a sensor unit including a plurality of pressure sensitive switch units connected in parallel to each other. Each of the pressure sensitive switch units is switched to an on state or an off state in correspondence to a pressure. A plurality of pressure sensitive switch units are arranged in the seat in a dispersed manner. The seat state detecting apparatus determines a load applied to the seat on the basis of the on/off state of a plurality of pressure sensitive switch units. The sensor unit is provided with a short-circuit detecting resistor which is connected in series to a plurality of pressure sensitive switch units.

Further, the present invention provides an aiming adjusting apparatus of a vehicular headlamp provided with the seat state detecting apparatus. An adjusting portion changes an aiming of the vehicular headlamp from a lower aim angle to an upper aim angle at a time when a load applied to the seat is determined to be over a predetermined value.

### BRIEF DESCRIPTION OF THE DRAWINGS

Fig. 1 is a circuit diagram of a seating detection apparatus in accordance with a first embodiment of the present invention;
Fig. 2 is a plan view showing a sensor unit shown in Fig. 1;
Fig. 3(a) is a cross-sectional view along line A-A in Fig. 2;
Fig. 3(b) is a cross sectional view along line B-B in Fig. 2;
Fig. 4 is a plan view showing a first film shown in Fig. 2;
Fig. 5 is a plan view showing a spacer shown in Fig. 2;
Fig. 6 is a plan view showing a second film shown in Fig. 2;
Fig. 7 is a perspective view showing a front passenger seat of a vehicle in which the sensor unit in Fig. 2 is assembled;
Fig. 8 is a plan view showing a sensor unit in accordance with a second embodiment of the present invention; and
Fig. 9(a) is a cross sectional view along line A-A in Fig. 8; and
Fig. 9(b) is a cross sectional view along line B-B in Fig. 8.

### BEST MODE FOR CARRYING OUT THE INVENTION

A description will be given of a first embodiment obtained of the present invention.

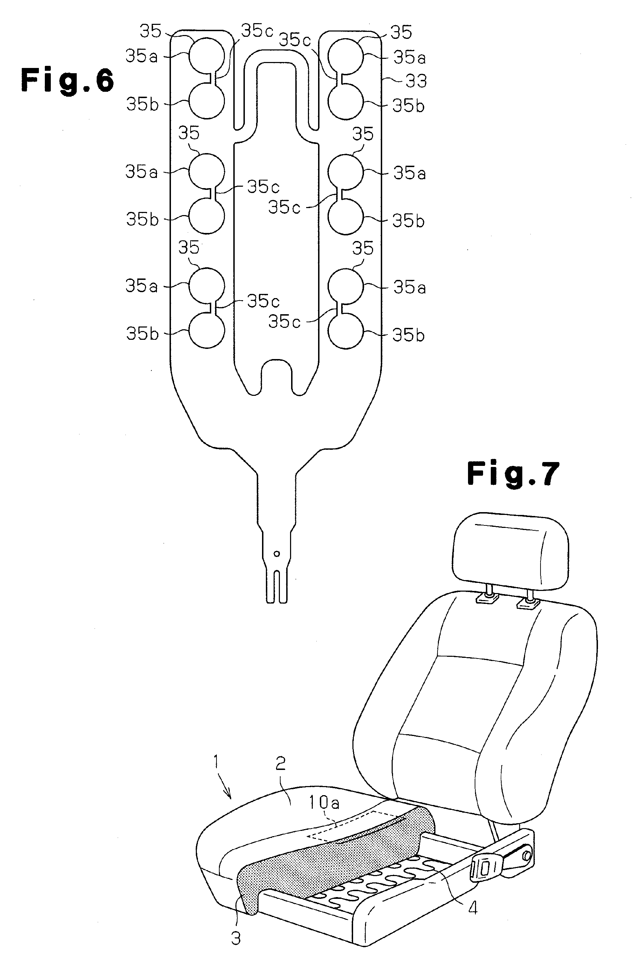

Fig. 7 is a perspective view showing a seat of a motor vehicle to which the present invention is applied. As shown in the drawing, the seat is, for example, a front passenger seat, and includes a seat portion 1. The seat portion 1 has a cushion spring 4, a cushion pad 3 arranged on the cushion spring 4, and a seat cover 2 covering the cushion pad 3. A sensor unit 10a of a seating detection apparatus 10 is accommodated in a rear section of a center portion in a width direction of the seat portion 1 in such a manner as to be held between the seat cover 2 and the cushion pad 3. The sensor unit 10a is arranged in such a manner as to be expanded along a seating surface of the seat portion 1. In this case, the sensor unit 10a may be accommodated in an inner portion of the cushion pad 3.

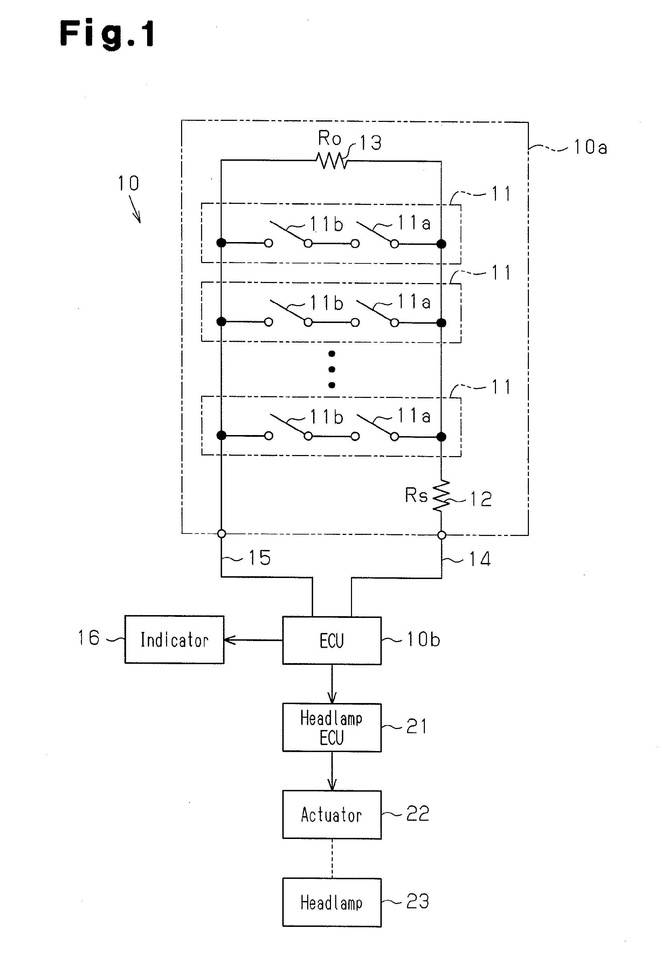

Fig. 1 is a circuit diagram showing an electric structure of the seating detection apparatus 10 and a peripheral structure thereof. As shown in the drawing, the seating detection apparatus 10 is provided with the sensor unit 10a, and an electronic control unit (hereinafter, refer to as ECU) 10b. The sensor unit 10a is provided with a plurality of pressure sensitive switch units 11 connected in parallel to each other, a short-circuit detecting resistor 12, and a break detecting resistor 13. The sensor unit 10a is connected to the ECU 10b via power source lines 14 and 15, and is supplied a predetermined voltage from the ECU 10b. The sensor unit 10a is accommodated in the seat portion 1 in such a manner that a plurality of pressure sensitive switch units 11 are arranged in the seat portion 1 in a dispersed manner.

Each of the pressure sensitive switch units 11 is provided with a plurality of (two) first and second pressure sensitive switches 11a and 11b connected in series. The first pressure sensitive switch 11a is connected to the power source line 14 via the short-circuit detecting resistor 12, and the second pressure sensitive switch 11b is connected to the power source line 15. Each of these first and second pressure sensitive switches 11a and 11b turns on or off in correspondence to a bearing pressure. Each of the pressure sensitive switch unit 11 comes to an on state in the case where both of the first and second pressure sensitive switches 11a and 11b simultaneously come to the on state, and comes to an off state in the case where at least one of the first and second pressure sensitive switches 11a and 11b comes to the off state. A redundancy of the pressure sensitive switch unit 11 is ensured by setting the pressure sensitive switch unit 11 to an assembly of a plurality of pressure sensitive switches 11a and 11b. In other words, a reliability of the pressure sensitive switch unit 11 is improved.

The short-circuit detecting resistor 12 mentioned above is connected in series to a plurality of pressure sensitive switch units 11 connected in parallel. One end of the short-circuit detecting resistor 12 is connected to the first pressure sensitive switch 11a, and the other end of the short-circuit detecting resistor 12 is connected to the power source line 15.

The break detecting resistor 13 is connected in parallel to a plurality of pressure sensitive switch units 11 connected in parallel. One end of the break detecting resistor 13 is connected to the first pressure sensitive switch 11a, and the other end of the break detecting resistor 13 is connected to the second pressure sensitive switch 11b.

The ECU 10b is connected to the sensor unit 10a via the power source lines 14 and 15, and monitors a resistance value of the sensor unit 10a as well as supplying a predetermined voltage to the sensor unit 10a. The ECU 10b determines whether or not an occupant sits on the seat portion 1 in correspondence to the resistance value of the sensor unit 10a.

In this case, the resistance value of the short-circuit detecting resistor 12 is set to a resistance value Rs, and the resistance value of the break detecting resistor 13 is set to a resistance value Ro. In this case, for example, in a state in which all of a plurality of pressure sensitive switch units 11 are in the off state, in the resistance value of the sensor unit 10a, the short-circuit detecting resistor 12 and the break detecting resistor 13 connected in series to each other form a dominant resistance value. In other words, the resistance value of the sensor unit 10a comes to a value close to a total (= Rs + Ro) of the resistance value Rs of the short-circuit detecting resistor 12 and the resistance value Ro of the break detecting resistor 13.

On the other hand, in a state in which at least one of a plurality of pressure sensitive switch units 11 is in the on state, the resistance value of the sensor unit 10a comes to a resistance value dominated by the short-circuit detecting resistor 12, that is, a value close to the resistance value Rs. Accordingly, the ECU 10b basically determines the occupant seated with respect to the seat portion 1 on the basis of a difference of the resistance values of the sensor unit 10a based on the on or off state of the pressure sensitive switch unit 11 in correspondence to the pressure which the sensor unit 10a bears. In this case, a plurality of pressure sensitive switch units 11 are formed and arranged in such a manner that at least one pressure sensitive switch unit 11 comes to the on state if the load applied to the seat portion 1 surpasses the predetermined value. Therefore, the ECU 10b has a function of determining whether or not the load applied onto the seat portion 1 surpasses the predetermined value, that is, a seat state detecting function in conjunction therewith.

Further, for example, in the case where the power source lines 14 and 15 are short circuited, an apparent resistance value of the sensor unit 10a comes to a resistance value which is sufficiently small in comparison with the resistance value Rs of the short-circuit detecting resistor 12. The ECU 10b detects the short circuit of the power source lines 14 and 15 on the basis of the small resistance value of the sensor unit 10a at this time. In other words, in the present embodiment, it is possible to electrically accurately distinguish the short circuit of the power source lines 14 and 15 from the on state of at least one of the pressure sensitive switch units 11, on the basis of the installation of the short-circuit detecting resistor 12. Accordingly, it is possible to avoid a matter that the ECU 10b erroneously determines that the occupant sits on the seat portion 1, due to the short circuit of the power source lines 14 and 15. In other words, on the assumption that the short-circuit detecting resistor 12 is not installed, if at least one of a plurality of pressure sensitive switch units 11 is in the on state, the resistance value of the sensor unit 10a comes to the sufficiently small resistance value in the same manner as the short circuit time of the power source lines 14 and 15. Accordingly, it becomes indefinite to distinguish the on state of at least one of the pressure sensitive switch units 11 from the short circuit of the power source lines 14 and 15. The short-circuit detecting resistor 12 in accordance with the present embodiment solves the problem.

Further, for example, in the case where the power source lines 14 and 15 are broken, the apparent resistance value of the sensor unit 10a comes to a resistance value which is sufficiently large in comparison with the total of the resistance value Rs of the short-circuit detecting resistor 12 and the resistance value Ro of the break detecting resistor 13. The ECU 10b detects a break in the power source lines 14 and 15 on the basis of the large resistance value of the sensor unit 10a at this time. In other words, in the present embodiment, it is possible to electrically accurately distinguish a break in the power source lines 14 and 15 from the off state of all of a plurality of pressure sensitive switch units 11, on the basis of the installation of the break detecting resistor 13. Accordingly, it is possible to avoid a matter that the ECU 10b erroneously determines that the occupant does not seat on the seat portion 1, due to a break in the power source lines 14 and 15. In other words, on the assumption that the break detecting resistor 13 is not installed, the resistance value of the sensor unit 10a comes to the sufficiently large resistance value in the same manner as the time of a break in the power source lines 14 and 15, in a state in which all of a plurality of pressure sensitive switch units 11 are in the off state. Accordingly, it becomes indefinite to distinguish the off state of all of a plurality of pressure sensitive switch units 11 from a break in the power source lines 14 and 15. The break detecting resistor 13 in accordance with the present embodiment solves the problem.

An indicator 16 serving as an informing portion urging the occupant to fasten a seat belt is connected to the ECU 10b. The ECU 10b turns on the indicator 16 at a time when the occupant sitting on the seat portion 1 is determined, thereby urging to fasten the seat belt. In this case, the ECU 10b does not turn on the indicator 16 at a time when it is determined that no occupant sits on the seat portion 1, at a time when a short circuit or a break in the power source lines 14 and 15 mentioned above is detected, or at a time when the fastening of the seat belt is detected.

Further, the ECU 10b is connected to a headlamp ECU 21 controlling the aiming of a vehicular headlamp. The ECU 10b outputs a signal corresponding to a state on the seat portion 1 (a state whether or not a load applied onto the seat portion 1 surpasses a predetermined value), to the headlamp ECU 21, on the basis of the resistance value of the sensor unit 10a. Further, the ECU 10b mentioned above outputs a signal indicating an existence of an abnormality to the headlamp ECU 21 in the case where the short circuit or a break in the power source lines 14 and 15 mentioned above is detected. The headlamp ECU 21 is connected to an actuator 22, drives the actuator 22 on the basis of the signal from the ECU 10b, and adjusts the aiming of the vehicular headlamp 23. The headlamp ECU 21 and the actuator 22 constitute an adjusting portion adjusting the aiming of the vehicular headlamp 23.

Specifically, the headlamp ECU 21 changes the aiming of the vehicular headlamp 23 from a lower aim angle to an upper aim angle in the case where the signal indicating the state in which the load applied onto the seat portion 1 surpasses the predetermined value is input from the ECU 10b. Generally, when a significant load is applied onto the seat portion 1, the vehicle body is lowered a degree of this load. At this time, the aiming of the vehicular headlamp 23 is lowered, and there is a risk that it is impossible to suitably light ahead of the vehicle, for example, a road surface. However, since the headlamp ECU 21 in accordance with the present embodiment drives the actuator 22 in correspondence to the condition, and changes the aiming of the vehicular headlamp 23 from the lower aim angle to the upper aim angle, it is possible to suitably light ahead of the vehicle. In other words, it is possible to suitably light the road surface ahead of the vehicle.

On the other hand, in the case where there is input from the ECU 10b the signal indicating the state in which the load applied onto the seat portion 1 does not exceed the predetermined value, or the signal indicating the existence of the short circuit or a break in the power source lines 14 and 15, the headlamp ECU 21 inhibits raising of the aiming of the vehicular headlamp 23. Accordingly, particularly at a time when the seating detection apparatus 10 is abnormal (the power source lines 14 and 15 are short circuited or broken), it is possible to prevent a field of vision of an oncoming vehicle from being disturbed by raising the aiming of the vehicular headlamp 23. Therefore, it is possible to avoid preventing the traveling of the oncoming vehicle.

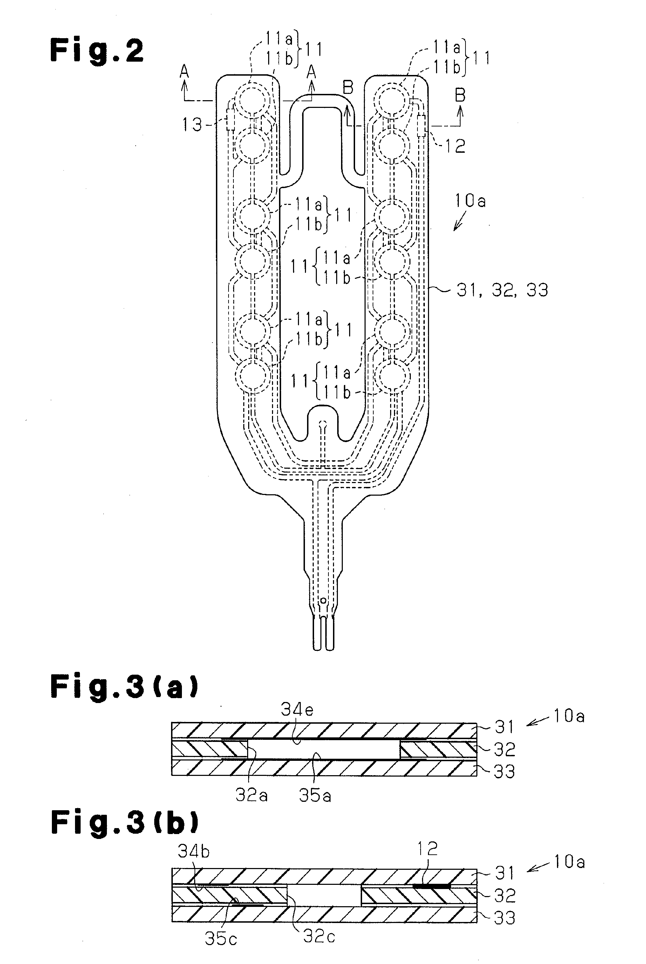

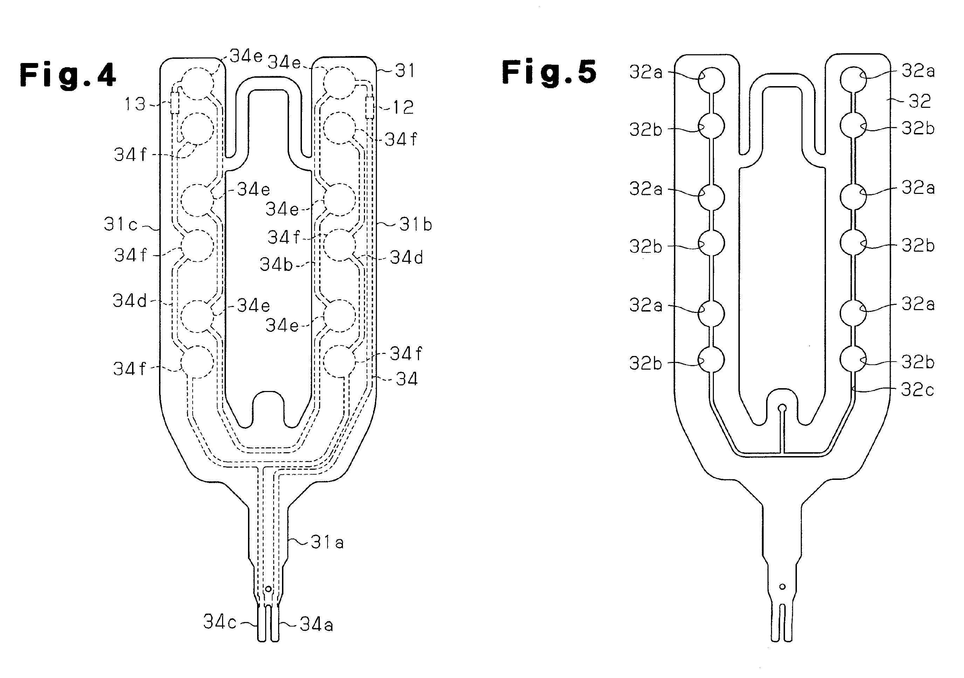

Next, a description will be given of a detailed structure of the sensor unit 10a with reference to Figs. 2 to 6. In this case, Fig. 2 is a plan view showing the sensor unit 10a, and Figs. 3(a) and 3(b) are respectively cross sectional views along line A-A and line B-B in Fig. 2. Further, Figs. 4, 5 and 6 are plan views respectively showing a first film 31, a spacer 32 and a second film 33 constituting the sensor unit 10a. As shown in Figs. 2 and 3, the sensor unit 10a is formed in an approximately Y-shaped sheet form (thin plate form) in a plan view, and the first film 31, the spacer 32 and the second film 33 are overlapped in order from above, thereby constructing a plurality of (six) pressure sensitive switch units 11 connected in parallel. The first and second pressure sensitive switches 11a and 11b in accordance with the present embodiment are arranged adjacently in left and right branch portions of the sensor unit 10a in such a manner as to line up in an extending direction of the branch portions extending in a vertical direction in Fig. 2.

Describing in detail, the first film 31 is formed in an approximately Y-shaped sheet form in a plan view, for example, by a polyethylene terephthalate (PET) material, and has a linear portion 31a extending in a vertical direction in Fig. 4, and a first branch portion 31b and a second branch portion 31c which are respectively branched to a right side and a left side in Fig. 4 from the linear portion 31a so as to extend in the vertical direction in Fig. 4. Further, a circuit pattern 34 is printed on a lower surface (a back surface in Fig. 4) of the first film 31. The circuit pattern 34 is basically formed by coating a printed silver paste by a carbon for preventing an oxidation. The antioxidant carbon is formed as a conductor having a smaller electric conductivity than that of the silver paste.

The circuit pattern 34 has a first terminal 34a arranged in a right side of a distal end of the linear portion 31a (a right side of a lower end of Fig. 4), a first wiring portion 34b continuously provided from the first terminal 34a, a second terminal 34c arranged in the other side of the distal end of the linear portion 31a (a left side of the lower end of Fig. 4), a second wiring portion 34d continuously provided from the second terminal 34c. The first and second terminals 34a and 34c correspond to externally connecting terminals for being respectively connected to the power source lines 14 and 15.

The first wiring portion 34b first extends upward near a right side of the linear portion 31a along the linear portion 31a from the first terminal 34a in Fig. 4, further extends near an outer side of the first branch portion 31b along the first branch portion 31b, and is turned back at the distal end of the first branch portion 31b so as to extend downward in a section near an inner side of the first branch portion 31b (the left side in Fig. 4). Further, the first wiring portion 34b is again turned back at a proximal end of the first branch portion 31b so as to extend upward near an inner side of the second branch portion 31c along the second branch portion 31c toward an upper side in Fig. 4. A plurality of (three) circular first electrodes 34e are formed at facing portions of the first wiring portion 34b to each other in the first and second branch portions 31b and 31c. More particularly, a portion in which the first wiring portion 34b extends near the inner side of the first branch portion 31b along the first branch portion 31b and a portion in which it extends near the inner side of the second branch portion 31c along the second branch portion 31c, so as to be spaced at a predetermined interval in the extending direction of the first wiring portion 34b. The diameter of the first electrodes 34e is sufficiently large in comparison with a width of the first wiring portion 34b.

In this case, the first wiring portion 34b is provided with a predetermined distance space between the first terminal 34a and the first electrode 34e existing at a closest position to the first terminal 34a on a path of the first wiring portion 34b (the first electrode 34e formed in the distal end of the first branch portion 31b). The short-circuit detecting resistor 12 is formed so as to fill in the space. Specifically, the short-circuit detecting resistor 12 is formed in such a manner as to have a predetermined resistance value Rs by the carbon printed in the space.

On the other hand, the second wiring portion 34d first extends upward near a left side of the linear portion 31a along the linear portion 31a in Fig. 4 from the second terminal 34c, and is thereafter branched into a portion extending upward near an outer side of the first branch portion 31b (the right side in Fig. 4) along the first branch portion 31b in Fig. 4, and a portion extending upward near an outer side of the second branch portion 31c (the left side in Fig. 4) along the second branch portion 31c in Fig. 4. A plurality of (three) circular second electrodes 34f are formed at a portion in which the second wiring portion 34d extends along the first branch portion 31b and a portion in which it extends along the second branch portion 31c, so as to be spaced at a predetermined interval in the extending direction of the first and second branch portions 31b and 31c. A diameter of the second electrodes 34f is the same as the diameter of the first electrodes 34e.

Centers of the totally six first and second electrodes 34e and 34f provided in the first branch portions 31b are arranged on a line extending in the extending direction of the first branch portion 31b. In the same manner, centers of the totally six first and second electrodes 34e and 34f provided in the second branch portion 31c are arranged on a line extending in the extending direction of the second branch portion 31c. Further, the first and second electrodes 34e and 34f arranged in the first branch portion 31b, and the first and second electrodes 34e and 34f arranged in the second branch portion 31c are arranged symmetrical in Fig. 4. A set of each of the first electrodes 34e and the second electrode 34f adjacent thereto form a set of isolated electrodes which are isolated by a predetermined distance in the extending direction of the first and second branch portions 31b and 31c. In other words, each of the sets of the isolated electrodes is formed by one set of first and second electrodes 34e and 34f which are isolated by the predetermined distance. In the first film 31, plural sets (six sets) of isolated electrodes are arranged so as to be electrically connected in parallel to each other.

In this case, the break detecting resistor 13 is formed in such a manner as to have a predetermined resistance value Ro by the carbon printed in the space which is previously provided between the first electrode 34e existing at the farthest position from the first terminal 34a on the path of the first wiring portion 34b (the first electrode 34e arranged in the distal end of the second branch portion 31c), and the second electrode 34f existing at the farthest position from the second terminal 34c on the path of the second branch portion 31d on the second branch portion 31c (the second electrode 34f arranged in the distal end of the second branch portion 31c).

As shown in Fig. 5, the spacer 32 is formed in an approximately Y-shaped sheet in a plan view form in the same manner as the first film 31, for example, by the PET material. An adhesive material is applied onto an upper surface of the spacer 32, and the first film 31 is mounted thereon, whereby the spacer 32 is connected to the first film 31 (refer to Figs. 3(a) and 3(b)). As shown in Fig. 5, the spacer 32 mentioned above has totally six sets of circular first and second opening portions 32a and 32b, and an approximately U-shaped internal air passage 32c connecting these first and second opening portions 32a and 32b. In a state in which the first film 31 is lapped over the spacer 32, the first and second opening portions 32a and 32b are respectively concentric with the first and second electrodes 34e and 34f. The first and second opening portions 32a and 32b have a smaller diameter than a diameter of the first and second electrodes 34e and 34f. As mentioned above, the same number of sets of first and second opening portions 32a and 32b are formed in the spacer 32 in correspondence to the plural number of sets of isolated electrodes (the first and second electrodes 34e and 34f). Further, the approximately U-shaped internal air passage 32c extends on a line connecting the centers of the first and second opening portions 32a and 32b in the respective branch portions in the right side and the left side of the spacer 32 so as to connect the first and second opening portions 32a and 32b, and connects between both the branch portions at base ends of both the branch portions of the spacer 32.

As shown in Fig. 6, the second film 33 mentioned above is formed as an approximately Y-shaped sheet form in a plan view in the same manner as the first film 31, for example, by the PET material. The second film 33 is connected to the spacer 32 by applying the adhesive agent to the lower surface of the spacer 32 and thereafter mounting the spacer 32 to the second film 33 (refer to Fig. 3). The first and second films 31 and 33 are held at a predetermined interval in an initial state in which the load is not applied to the sensor unit 10a, by interposing the spacer 32 therebetween. As shown in Fig. 6, a plurality of (six) circuit patterns 35 are printed on the upper surface (the facing surface to the first film 31) of the second film 33. These circuit patterns 35 are basically formed by coating a printed silver paste by an antioxidant carbon. The antioxidant carbon is formed as a conductor having a smaller electric conductivity than the silver paste.

Each of the circuit patterns 35 has a pair of circular first and second counter electrodes 35a and 35b. In a state in which the first film 31 is lapped over the second film 33 via the spacer 32, the first and second counter electrodes 35a and 35b are respectively concentric with the first and second electrodes 34e and 34f. Further, the first and second counter electrodes 35a and 35b have the same diameter as the diameter of the first and second electrodes 34e and 34f. Further, the respective pair of counter electrodes 35a and 35b are short circuited with each other by the wiring portion 35c extending so as to be shifted from the line connecting the centers thereof. In other words, the plural sets (six sets) of the pairs of counter electrodes 35a and 35b short circuited by the wiring portion 35c are arranged in the second film 33.

In this case, it is assumed that the first film 31 and the second film 33 are deflected on the basis of the pressure application, and any one set of first and second electrodes 34e and 34f and a pair of counter electrodes 35a and 35b facing to the first and second electrodes 34e and 34f are brought into contact with each other via the first and second opening portions 32a and 32b of the spacer 32 so as to be conducted. At this time, the first terminal 34a (the power source line 14) connected to the first electrode 34e via the short-circuit detecting resistor 12 is conducted with the second terminal 34c (the power source line 15) connected to the second electrode 34f by a pair of counter electrodes 35a and 35b brought into contact with these first and second electrodes 34e and 34f. In other words, each of the pressure sensitive switch units 11 is constituted by a pair of electrodes 34e and 34f on the first film 31, and a pair of counter electrodes 35a and 35b on the second film 33 facing to these electrodes 34e and 34f. Further, the first pressure sensitive switch 11a of each of the pressure sensitive switch units 11 is constituted by the first electrode 34e and the first counter electrode 35a facing to the first electrode 34e. The second pressure sensitive switch 11b is constituted by the second electrode 34f and the second counter electrode 35b facing to the second electrode 34f. An interval between the first and second counter electrodes 35a and 35b connected to each other by the wiring portion 35c is smaller than an interval between the pressure sensitive switch units 11 which are adjacent to each other.

In this case, a volumetric capacity within the first and second opening portions 32a and 32b is changed in correspondence to the deflection of the first film 31 and the second film 33. An air is discharged from the first and second opening portions 32a and 32b via the internal air passage 32c, or is sucked into the first and second opening portions 32a and 32b, in correspondence to the change of the volumetric capacity.

As in detail described above, in accordance with the present embodiment, the following advantages can be obtained.
(1) In the present embodiment, for example, in the case that at least one of a plurality of pressure sensitive switch units 11 is in the on state, a resistance value Rs of the short-circuit detecting resistor 12 connected in series to a plurality of pressure sensitive switch units 11 forms a dominant value among the resistance value of the sensor unit 10a. On the other hand, for example, in the case that the power source lines 14 and 15 feeding electricity to the sensor unit 10a is short circuited, an apparent resistance value of the sensor unit 10a comes to a value which is sufficiently small in comparison with the resistance value Rs of the short-circuit detecting resistor 12. In other words, the short circuit of the power source lines 14 and 15 and the on state of the pressure sensitive switch unit 11 can be accurately distinguished electrically on the basis of the installation of the short-circuit detecting resistor 12.
   Accordingly, it is possible to prevent short circuit of the power source lines 14 and 15 from generating an erroneous determination that the occupant sits on the seat 1, that is, the load applied to the seat 1 surpasses the predetermined value.
(2) In the present embodiment, for example, in the case that all of a plurality of the pressure sensitive switch units 11 are in the off state, a total of the resistance value Rs of the short-circuit detecting resistor 12 and the resistance value Ro of the break detecting resistor 13 forms a dominant value in the resistance value of the sensor unit 10a. On the other hand, for example, in the case that the power source lines 14 and 15 for feeding electricity to the sensor unit 10a is broken, the apparent resistance value of the sensor unit 10a comes to a value which is sufficiently large in comparison with the total of the resistance value Rs of the short-circuit detecting resistor 12 and the resistance value Ro of the break detecting resistor 13. In other words, it is possible to accurately distinguish the break in the power source lines 14 and 15 from the off state of all of a plurality of the pressure sensitive switch units 11 on the basis of the installation of the break detecting resistor 13. Accordingly, it is possible to prevent break in the power source lines 14 and 15 from generating an erroneous determination that the occupant does not seat on the seat 1, that is, the load applied to the seat 1 does not surpass the predetermined value.
(3) In the present embodiment, when the load applied to the seat 1 mentioned above is determined to be over the predetermined value, the headlamp ECU 21 changes the aiming of the vehicular headlamp 23 from the lower aim angle to the upper aim angle. Accordingly, it is possible to suitably light ahead of the vehicle. Further, for example, when the power source lines 14 and 15 are short circuited, the ECU 10b inhibits the change of the aiming of the vehicular headlamp 23 from the lower aim angle to the upper aim angle. Accordingly, it is possible to prevent the aiming of the vehicular headlamp 23 from being changed to the upper aim angle as to prevent the oncoming vehicle from traveling.
(4) In the present embodiment, the indicator 16 is turned on at a time of determining that the occupant of the seat 1 sits, whereby the occupant is urged to fasten the seat belt. Accordingly, it is possible to suppress a nonuse of the seat belt or the like.
(5) In the present embodiment, the resistance value of the sensor unit 10a is switched in stages in correspondence to the occupant seated on the seat 1, or short circuit and break in the power source lines 14 and 15. Accordingly, it is possible to simplify the circuit structure for detecting a seated occupant, short circuit and break in the power source lines 14 and 15 or the like mainly based on a threshold value determination or the like in comparison with, for example, the sensor unit in which the resistance value is changed linearly.
(6) In the present embodiment, lowering of the vehicle is detected by determining the load surpassing the predetermined value by the seating detection apparatus 10, for example, without providing an independent vehicle height sensor in the front portion of the vehicle. Further, it is possible to adjust the aiming of the vehicular headlamp 23 on the basis of the result of the detection. Therefore, it is possible to avoid the cost increase and the constraint of the design freedom, for example, generated by independently setting the vehicle height sensor.
(7) In the present embodiment, the system adjusting the aiming of the headlamp is constituted by partly using the system (the seating detection apparatus 10) detecting an occupant seated on the seat 1 so as to urge to fasten the seat belt. Accordingly, it is possible to suppress the design change and the cost increase required for the aiming adjusting system of the headlamp to the minimum.
(8) The sensor unit 10a in accordance with the present embodiment is provided with a plurality of pressure sensitive switch units 11 connected in parallel to each other. Accordingly, for example, even if any one pressure sensitive switch unit 11 is broken, it is possible to continue the determination whether or not an occupant sits on the seat 1 by means of the remaining pressure sensitive switch unit 11.
(9) In the present embodiment, the structure is made such as to determine whether or not the occupant sits on the seat 1, on the basis of the on or off of the pressure sensitive switch unit 11. Accordingly, it is possible to reliably determine whether or not an occupant sits on the seat 1 on the basis of the simple structure.

A description will be given below of a second embodiment obtained by embodying the present invention with reference to the accompanying drawings. The second embodiment is structured such that the layout of the first and second pressure sensitive switches 11a and 11b in accordance with the first embodiment is changed in such a manner that they are arranged in a direction orthogonal to the extending direction of the branch portions in the left and right branch portions of the sensor unit. Detailed descriptions of the same portions will be omitted.

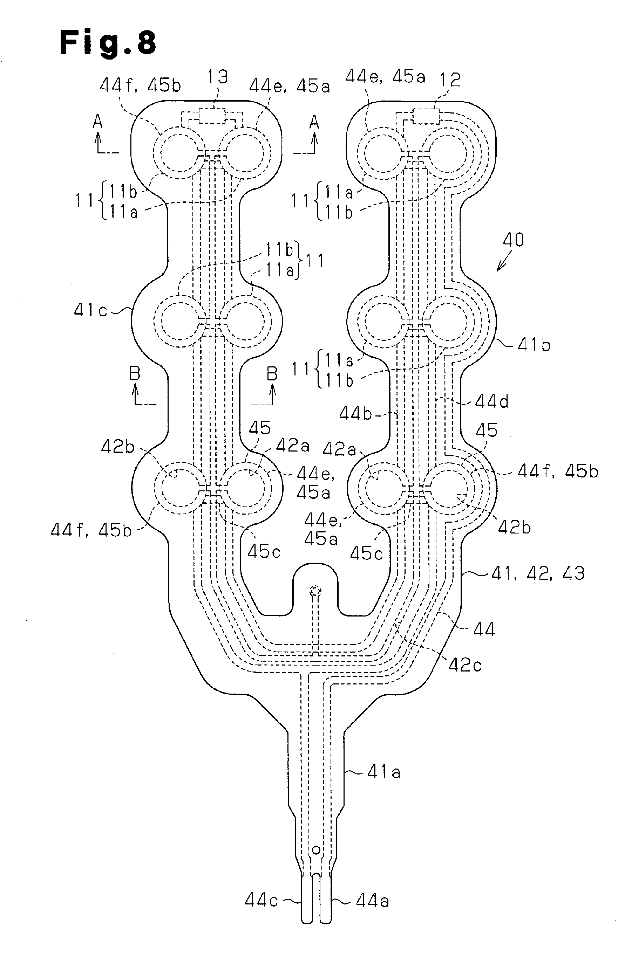

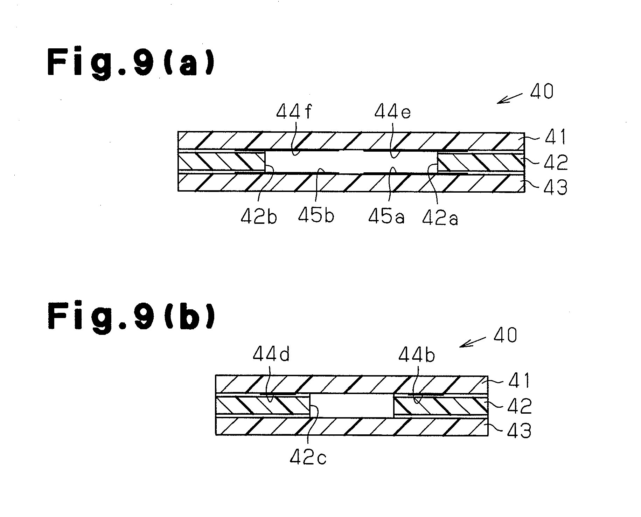

Fig. 8 is a plan view showing a sensor unit 40 in accordance with the present embodiment, and Figs. 9(a) and 9(b) are cross sectional views respectively along line A-A and line B-B in Fig. 8. As shown in Fig. 8, the sensor unit 40 is formed in an approximately Y-shaped sheet form in a plan view, and a first film 41, a spacer 42 and a second film 43 are overlapped in order from above, thereby constructing a plurality of (six) pressure sensitive switch units 11 connected in parallel to each other. Further, the first and second pressure sensitive switches 11a and 11b in accordance with the present embodiment are arranged in adjacent to each other in a direction (a lateral direction) orthogonal to an extending direction of the sensor unit 40 in left and right branch portions of the sensor unit 40.

Describing in detail, as shown in Fig. 8, the first film 41 is formed in an approximately Y-shaped sheet form in a plan view, for example, by the PET material, and has a linear portion 41a, and a first branch portion 41b and a second branch portion 41c which are respectively branched to a right side and a left side in Fig. 8 from the linear portion 41a. Further, a circuit pattern 44 is printed on a lower surface (a back surface in Fig. 8) of the first film 41. The circuit pattern 44 is formed by coating the printed silver paste by the antioxidant carbon.

The circuit pattern 44 has a first terminal 44a arranged in a right side of a distal end of the linear portion 41a, a first wiring portion 44b continuously provided from the first terminal 44a, a second terminal 44c arranged in a left side of the distal end of the linear portion 41a, and a second wiring portion 44d continuously provided from the second terminal 44c. The first and second terminals 44a and 44c correspond to externally connecting terminals for being respectively connected to the power source lines 14 and 15.

The first wiring portion 44b extends near a right side of the linear portion 41a from the first terminal 44a, further extends near an outer side of the first branch portion 41b, is turned back at the leading end of the first branch portion 41b so as to extend near a left side of the first branch portion 41b, and is again turned back at a base end of the first branch portion 41b so as to extend near a right side of the second branch portion 41c. Further, a plurality of (three) circular first electrodes 44e are formed in a portion in which the first wiring portion 44b extends near the left side of the first branch portion 41b and a portion in which it extends near the right side of the second branch portion 41c, so as to be spaced at a predetermined interval in the extending direction.

In this case, the first wiring portion 44b is previously provided with a predetermined distance space between the first terminal 44a, and the first electrode 44e existing at a closest position to the first terminal 44a on a path thereof (the first electrode 44e arranged in the distal end of the first branch portion 41b), and the short-circuit detecting resistor 12 is formed in such a manner as to have the predetermined resistance value Rs by the carbon printed so as to fill in the space.

On the other hand, the second wiring portion 44d extends near a left side of the linear portion 41a from the second terminal 44c so as to be branched, and extends near a right side of the first branch portion 41b and near a left side of the second branch portion 41c, respectively. Further, a plurality of (three) circular second electrodes 44f are formed in a portion in which the second wiring portion 44d extends near the right side of the first branch portion 41b and a portion in which it extends near the left side of the second branch portion 41c, so as to be spaced at a predetermined interval in the extending direction. A diameter of the second electrodes 44f is the same as the diameter of the first electrode 44e.

In each of the first and second branch portions 41b and 41c, the first and second electrodes 44e and 44f are arranged symmetrical. Further, the first and second electrodes 44e and 44f arranged in the first branch portion 41b, and the first and second electrodes 44e and 44f arranged in the second branch portion 41c are arranged symmetrical. Each of the first electrodes 44e and the second electrode 44f adjacent thereto constitute a set of isolated electrodes which are isolated at a predetermined distance in a direction orthogonal to the extending direction of the first and second branch portions 41b and 41c. In other words, each of the sets of the isolated electrodes is formed by a set of first and second electrodes 44e and 44f which are isolated at the predetermined distance. Plural sets (six sets) of the isolated electrodes are arranged in the first film 41 so as to be connected in parallel.

In this case, a space is previously formed between the first electrode 44e existing at the farthest position from the first terminal 44a on the path of the first wiring portion 44b (the first electrode 44e arranged in the distal end of the second branch portion 41c), and the second electrode 44f existing at the farthest position from the second terminal 44c on the path of the second wiring portion 44d in the second branch portion 41c (the second electrode 44f arranged in the distal end of the second branch portion 41c). The break detecting resistor 13 is formed in such a manner as to have the predetermined resistance value Ro by the carbon printed so as to fill in the space.

The spacer 42 is formed in an approximately Y-shaped sheet form in a plan view in the same manner as the first film 41, for example, by the PET material. An adhesive agent is applied to an upper surface of the spacer 42. The first film 41 is mounted on the upper surface mentioned above, thereby the spacer 42 is connected to the first film 41 (refer to Fig. 9). The spacer 42 mentioned above has circular first and second opening portions 42a and 42b which are respectively concentric with the first and second electrodes 44e and 44f, in a state in which the spacer 42 is lapped over the first film 41. The first and second opening portions 42a and 42b have a smaller diameter than a diameter of the first and second electrodes 44e and 44f. In other words, the opening portion is formed in the spacer 42 in correspondence to each of the pairs of the isolated electrodes. Further, an internal air passage 42c of the spacer 42 connects both the opening portions 42a and 42b along center lines of both the opening portions 42a and 42b in respective branch portions in a right side and a left side of the spacer 42, and connects between the branch portions in both sides in base ends of the branch portions.

The second film 43 is formed in an approximately Y-shaped sheet form in a plan view in the same manner as the first film 41, for example, by the PET material. An adhesive agent is applied to a lower surface of the spacer 42, and the second film 43 is stuck to the lower surface of the spacer 42 (refer to Fig. 9). In other words, the first and second films 41 and 43 are held at a predetermined interval in an initial state in which no load is applied, by interposing the spacer 42 therebetween. A plurality of (six) circuit patterns 45 are printed on an upper surface (a facing surface to the first film 41) of the second film 43. These circuit patterns 45 are formed by coating the printed silver paste by the antioxidant carbon.

The circuit pattern 45 has circular first and second counter electrodes 45a and 45b which are respectively concentric with the first and second electrodes 44e and 44f, in a state in which the first film 41 is lapped over the second film 43 via the spacer 42. The first and second counter electrodes 45a and 45b have the same diameter as the diameter of the first and second electrodes 44e and 44f. Further, each pair of counter electrodes 45a and 45b are short circuited to each other by a wiring portion 45c which is arranged so as to be shifted from a line connecting centers of both the first and second counter electrodes 45a and 45b. As mentioned above, plural sets (six sets) of a pair of counter electrodes 45a and 45b short circuited by the wiring portion 45c are arranged in the second film 43.

In the structure mentioned above, the pressure sensitive switch unit 11 is constituted by the first and second electrodes 44e and 44f, and a pair of counter electrodes 45a and 45b facing thereto. Further, the first pressure sensitive switch 11a is constituted by the first electrode 44e, and the first counter electrode 45a facing to the first electrode 44e. The second pressure sensitive switch 11b is constituted by the second electrode 44f, and the second counter electrode 45b facing to the second electrode 44f.

In accordance with the present embodiment described in detail as mentioned above, it is possible to obtain the same advantages as the advantages of the first embodiment.

The above described embodiments may be modified as follows.

In each of the embodiments mentioned above, the short-circuit detecting resistor 12 is arranged between the first terminals 34a and 44a, and the first electrodes 34e and 44e existing at the closest position to the first terminals 34a and 44a on the path of the first wiring portion 34b. In contrast, for example, the short-circuit detecting resistor 12 may be arranged between the second terminals 34c and 44c, and the second electrodes 34f and 44f existing at the closest position to the second terminals 34c and 44c on the path of the second wiring portion 34d (that is, the second electrodes 34f and 44f arranged in the proximal ends of the first branch portions 31b and 41b or the second branch portions 31c and 41c.

In each of the embodiments mentioned above, the number of the pressure sensitive switch units 11 connected in parallel to each other may be set to any number as far as it is a plural number. Further, the layout of a plurality of pressure sensitive switch units 11 and a plurality of pressure sensitive switches 11a and 11b constituting them may be appropriately changed.

In each of the embodiments mentioned above, all of the first terminals 34a and 44a, and the first wiring portions 34b and 44b connected to the power source line 14, and the second terminals 34c and 44c, and the second wiring portions 34d and 44d connected to the power source line 15 are printed on the first films 31 and 41. In contrast, for example, the first terminals 34a and 44a and the first wiring portions 34b and 44b may be printed on any one of the first films 31 and 41 and the second films 33 and 43, and the second terminals 34c and 44c and the second wiring portions 34d and 44d may be printed on the other of the first films 31 and 41 and the second films 33 and 43. Further, in addition to the structure mentioned above, it is possible to appropriately change the shapes of the circuit patterns 34 and 44 printed on the first films 31 and 41, and the circuit patterns 35 and 45 printed on the second films 33 and 43.

In each of the embodiments mentioned above, the circuit patterns 35 and 45 may be printed by other materials, for example, a silver-carbon paste and the like.

In each of the embodiments mentioned above, the first films 31 and 41 may be arranged below the second films 33 and 43 via the spacers 32 and 42 by inverting the layout of the first films 31 and 41 and the layout of the second films 33 and 43.

In each of the embodiments mentioned above, the first films 31 and 41, the spacers 32 and 42 and the second films 33 and 43 may be formed by other materials, for example, a polyethylene naphthalate material and the like.

In each of the embodiments mentioned above, for example, in the case that the cushion pad 3 is constituted by divided pads divided into upper and lower sections, the sensor units 10a and 40 may be accommodated between the upper and lower divided pads.

In each of the embodiments mentioned above, although not particularly referred, the ECU 10b may be constituted by a combination of a digital computer provided with a central processing unit (CPU) and a general-purpose logic circuit such as a comparator or the like.

In each of the embodiments mentioned above, the ECU 10b and the headlamp ECU 21 may be integrated so as to form a single control apparatus.

In each of the embodiments mentioned above, the function of detecting the seating in the seating detection apparatus 10 determining whether or not the occupant sits on the seat portion 1 serves as the function of the seat state detection determining whether or not the load applied onto the seat portion 1 surpasses the predetermined value. In contrast, the structure may be made such as to be independently provided with a dedicated apparatus for detecting the seat state, which has the structure (the sensor unit 10a and 40 and the ECU 10b) based on the seating detection apparatus 10. Further, the aiming of the vehicular headlamp 23 may be adjusted and controlled on the basis of the detection of the seat state obtained by the independent seat state detecting apparatus.

In each of the embodiments mentioned above, in the case that the occupant seated on the seat portion 1 is determined by the seating detection apparatus 10, for example, a warning sound or a voice urging to fasten the seat belt may be generated from a speaker.

In each of the embodiments mentioned above, the present invention is applied to the determination of the occupant seated with respect to the front passenger seat of the vehicle, however, it may be applied to a determination of the occupant seated on other various seats.

## Claims

1. A seat state detecting apparatus comprising a sensor unit including a plurality of pressure sensitive switch units connected in parallel to each other, wherein each of the pressure sensitive switch units is switched to an on state or an off state in correspondence to a pressure, a plurality of the pressure sensitive switch units are arranged in a seat in a dispersed manner, the seat state detecting apparatus determines a load applied to the seat on the basis of the on/off state of said plurality of the pressure sensitive switch units,
the apparatus being **characterized in that** said sensor unit is provided with a short-circuit detecting resistor connected in series to said plurality of pressure sensitive switch units.

2. The seat state detecting apparatus according to claim 1, **characterized in that** said apparatus determines that the load applied to the seat surpasses a predetermined value on the bass of the on state of at least one pressure sensitive switch unit.

3. The seat state detecting apparatus according to claim 1, **characterized in that** said apparatus determines that the occupant sits on the seat on the basis of the on state of at least one pressure sensitive switch unit.

4. The seat state detecting apparatus according to claim 1, **characterized in that** said sensor unit comprises:
first and second terminals connected to a power source;
a first film provided with plural sets of first and second electrodes isolated to each other, each of said first electrodes being connected to said first terminal, and each of said second electrodes being connected to said second terminal;
a spacer having a plurality of openings respectively formed in correspondence to the electrodes; and
a second film lapped over said first film in such a manner as to hold said spacer therebetween, said second film being provided with plural sets of first counter electrodes and second counter electrodes, said first counter electrodes facing to the first electrodes through the opening portions of said spacer, said second counter electrodes facing to the second electrodes through said opening portions, and the first and second counter electrodes in each of the sets being short circuited with each other,
wherein each of the pressure sensitive switch units includes the set of said first and second electrodes and the set of the first and second counter electrodes.

5. The seat state detecting apparatus according to claim 4, **characterized in that** said first film has an electric path connecting said first terminal to a plurality of first electrodes in series, and said short-circuit detecting resistor is provided between said first terminal and the first electrode which is closest to said first terminal on the electric path.

6. The seat state detecting apparatus according to any one of claims 1 to 5, **characterized in that** said sensor unit is provided with a break detecting resistor connected to said plurality of pressure sensitive switch units in parallel.

7. The seat state detecting apparatus according to claim 4 or 5, **characterized in that** said sensor unit is provided with a break detecting resistor connected to said plurality of pressure sensitive switch units in parallel, said first film has a first electric path connecting said first terminal to a plurality of first electrodes in series, and a second electric path connecting said second terminal to a plurality of second electrodes in series, wherein said break detecting resistor is provided between the first electrode which is farthest from said first terminal on the first electric path, and the second electrode which is farthest from said second terminal on the second electric path.

8. An aiming adjusting apparatus of a vehicular headlamp provided with the seat state detecting apparatus according to claim 2, **characterized by** an adjusting portion changing aiming of the vehicular headlamp from a lower aim angle to an upper aim angle at a time when a load applied onto said seat is determined to be over a predetermined value.

9. An aiming adjusting apparatus of a vehicular headlamp provided with the seat state detecting apparatus according to claim 4 or 5, **characterized in that** the seat state detecting apparatus determines that a load applied to the seat surpasses a predetermined value on the basis of an on state of at least one pressure sensitive switch unit, and the aiming adjusting apparatus of the vehicular headlamp is provided with an adjusting portion that changes aiming of the vehicular head lamp from a lower aim angle to an upper aim angle, at a time when the load applied to said seat is determined to be over the predetermined value.

10. An aiming adjusting apparatus of a vehicular headlamp provided with the seat state detecting apparatus according to claim 6, **characterized in that** the seat state detecting apparatus determines that a load applied to a seat surpasses a predetermined value on the basis of an on state of at least one of pressure sensitive switch unit, and the aiming adjusting apparatus of the vehicular headlamp is provided with an adjustment portion that changes the aiming of the vehicular headlamp from a lower aim angle to an upper aim angle at a time when the load applied to said seat is determined to be over the predetermined value.

11. An aiming adjusting apparatus of a vehicular headlamp provided with the seat state detecting apparatus according to claim 7, **characterized in that** the seat state detecting apparatus determines that a load applied to the seat surpasses a predetermined value on the basis of an on state of at least one pressure sensitive switch unit, and the aiming detecting adjusting apparatus of the vehicular headlamp is provided with an adjusting portion that changes aiming of the vehicular head lamp from a lower aim angle to an upper aim angle at a time when the load applied to said seat is determined to be over the predetermined value.

## Amended claims

### Amended claims under Art. 19.1 PCT

1. (amended) A seat state detecting apparatus comprising a sensor unit including a plurality of pressure sensitive switch units connected in parallel to each other, wherein each of the pressure sensitive switch units is switched to an on state or an off state in correspondence to a pressure, a plurality of the pressure sensitive switch units are arranged in a seat in a dispersed manner, the seat state detecting apparatus determines a load applied to the seat on the basis of the on/off state of said plurality of the pressure sensitive switch units,
the apparatus being **characterized in that** said sensor unit includes:
a first film on which a plurality of electrodes are printed;
a spacer having a plurality of opening portions respectively formed in correspondence to the electrodes;
a second film lapped over said first film so as to hold said spacer therebetween, and on which a plurality of counter electrodes are printed so as to respectively face to said plurality of electrodes through the opening portions of said spacer; and
a short-circuit detecting resistor connected in series to said plurality of pressure sensitive switch units,
wherein said short-circuit detecting resistor is printed on said first film, and is arranged between said first and second films.

2. The seat state detecting apparatus according to claim 1, **characterized in that** said apparatus determines that the load applied to the seat surpasses a predetermined value on the bass of the on state of at least one pressure sensitive switch unit.

3. The seat state detecting apparatus according to claim 1, **characterized in that** said apparatus determines that the occupant sits on the seat on the basis of the on state of at least one pressure sensitive switch unit.

4. (Amended) The seat state detecting apparatus according to claim 1, **characterized in that** said sensor unit comprises:
first and second terminals connected to a power source,
wherein the electrodes of the first film include plural sets of first and second electrodes isolated to each other, each of said first electrodes being connected to said first terminal, and each of said second electrodes being connected to said second terminal,
wherein the counter electrodes of said second film include plural sets of first counter electrodes and second counter electrodes, said first counter electrodes facing to the first electrodes through the opening portions of said spacer, said second counter electrodes facing to the second electrodes through said opening portions, and the first and second counter electrodes in each of the sets being short circuited with each other, and
wherein each of the pressure sensitive switch units includes the set of said first and second electrodes and the set of the first and second counter electrodes.

5. The seat state detecting apparatus according to claim 4, **characterized in that** said first film has an electric path connecting said first terminal to a plurality of first electrodes in series, and said short-circuit detecting resistor is provided between said first terminal and the first electrode which is closest to said first terminal on the electric path.

6. The seat state detecting apparatus according to any one of claims 1 to 5, **characterized in that** said sensor unit is provided with a break detecting resistor connected to said plurality of pressure sensitive switch units in parallel.

7. The seat state detecting apparatus according to claim 4 or 5, **characterized in that** said sensor unit is provided with a break detecting resistor connected to said plurality of pressure sensitive switch units in parallel, said first film has a first electric path connecting said first terminal to a plurality of first electrodes in series, and a second electric path connecting said second terminal to a plurality of second electrodes in series, wherein said break detecting resistor is provided between the first electrode which is farthest from said first terminal on the first electric path, and the second electrode which is farthest from said second terminal on the second electric path.

8. An aiming adjusting apparatus of a vehicular headlamp provided with the seat state detecting apparatus according to claim 2, **characterized by** an adjusting portion changing aiming of the vehicular headlamp from a lower aim angle to an upper aim angle at a time when a load applied onto said seat is determined to be over a predetermined value.

9. An aiming adjusting apparatus of a vehicular headlamp provided with the seat state detecting apparatus according to claim 4 or 5, **characterized in that** the seat state detecting apparatus determines that a load applied to the seat surpasses a predetermined value on the basis of an on state of at least one pressure sensitive switch unit, and the aiming adjusting apparatus of the vehicular headlamp is provided with an adjusting portion that changes aiming of the vehicular head lamp from a lower aim angle to an upper aim angle, at a time when the load applied to said seat is determined to be over the predetermined value.

10. An aiming adjusting apparatus of a vehicular headlamp provided with the seat state detecting apparatus according to claim 6, **characterized in that** the seat state detecting apparatus determines that a load applied to a seat surpasses a predetermined value on the basis of an on state of at least one of pressure sensitive switch unit, and the aiming adjusting apparatus of the vehicular headlamp is provided with an adjustment portion that changes the aiming of the vehicular headlamp from a lower aim angle to an upper aim angle at a time when the load applied to said seat is determined to be over the predetermined value.

11. An aiming adjusting apparatus of a vehicular headlamp provided with the seat state detecting apparatus according to claim 7, **characterized in that** the seat state detecting apparatus determines that a load applied to the seat surpasses a predetermined value on the basis of an on state of at least one pressure sensitive switch unit, and the aiming detecting adjusting apparatus of the vehicular headlamp is provided with an adjusting portion that changes aiming of the vehicular head lamp from a lower aim angle to an upper aim angle at a time when the load applied to said seat is determined to be over the predetermined value.
